# EUROPEAN PATENT SPECIFICATION

(11) **EP 2 680 377 B1**
(45) Date of publication and mention of the grant of the patent: **10.05.2017**
(21) Application number: 12174305.8
(22) Date of filing: 29.06.2012
(51) Int. Cl.: H01S 3/109, H01S 3/02, H01S 3/16, H01S 3/042, H01S 3/08, H01S 3/0941, H01S 3/23, H01S 3/04, H01S 3/00

(54) **Method for making a laser module**
Verfahren zur Herstellung eines Lasermoduls
Procédé de fabrication d'un module à laser

(43) Date of publication of application: 01.01.2014
(73) Proprietor: C2C Link Corporation, Hamilton, Ontario L9H6X7 (CA); Nanjing CQ Laser Technologies Co., Ltd., Nanjing 210046 (CN)
(72) Inventor: Xu, Qingyang, Hamilton Ontario L9H6X7 (CA); Lu, Yang, Hamilton Ontario L9H6X7 (CA); Su, Hongping, Nanjing 210046 (CN); Li, Xiangyang, Nanjing 210046 (CN)
(74) Representative: Stöckeler, Ferdinand

(56) References cited:
- WO-A1-2011/140641
- US-A- 5 835 518
- US-A1- 2005 058 174
- CLAESSON AA ET AL: "Diode-pumped miniature lasers using microstructured silicon carriers", ELECTRONICS LETTERS, IEE STEVENAGE, GB, vol. 36, no. 5, 2 March 2000 (2000-03-02), pages 433-434, XP006014947, ISSN: 0013-5194, DOI: 10.1049/EL:20000396
- LIN S T ET AL: "Broadband fiber-laser-pumped CW OPO for red, green, blue laser generation", LASERS&ELECTRO OPTICS&THE PACIFIC RIM CONFERENCE ON LASERS AND ELECTRO-OPTICS, 2009. CLEO/PACIFIC RIM '09. CONFERENCE ON, IEEE, PISCATAWAY, NJ, USA, 30 August 2009 (2009-08-30), pages 1-2, XP031549999, ISBN: 978-1-4244-3829-7

## Description

### Technical field of the invention

The invention relates to the field of laser technique, and more specifically to a method for making a laser module.

### Background of the invention

Recently, the laser display has been used more and more extensively (for example, it could be applied to the miniature projection device embedded in mobile phones, portable projects and laser TVs or the like). In the field of laser display, a discrete laser device with three base colors of Red, Green and Blue (RGB), which is low cost, small size, high efficiency and high power, is required urgently. Although the red and blue semiconductor laser diode can meet the cost/performance requirement of laser display, the green semiconductor laser diode cannot meet the requirement.

According to different types of projectors, the green laser needs a power of 100mW to several watts. However, the green laser emitted from the current Diode Pumped Solid-state Laser (DPSSL) cannot meet the requirements of all laser display devices. For example, the DPSSL based on the optically contacted Neodymium doped Yttrium Orthovanadate (Nd:YVO₄) and Potassium Titanyl Phosphate (KTP) can only generate green laser of less than 100mW. Although the DPSSL made by separate Nd:YVO₄ and KTP can generate green laser of more than 1W, the requirement on strict size and cost cannot be met. The portable laser projector urgently needs a green laser which has the power of 300-1000mW, high efficiency and small size.

By comparison with the KTP and Lithium Triborate (LBO) crystal in the prior art, the MgO doped Periodically Poled Lithium Niobate (MgO:PPLN) can generate green laser efficiently. Using 20 W 808 nm laser diode pump to generate green laser of 6W has been recorded (Please refer to Y. Qi, et al., "High Power green laser with PPMgLN intracavity doubled," CLEO/Pacific Rim '09, pp.1-2, 2009), the MgO:PPLN crystal can also be used to achieve higher conversion efficiency (52%) (Refer to M. Zhou, et al., "52% optical-to-optical conversion efficiency in a compact 1.5W 532 nm second harmonic generation laser with intracavity periodically-poled MgO:LiNbO3," Laser Physics, vol.20, no.7, pp.568-1571, 2010). However, these efficient discrete DPSS green lasers are achieved with a complicated packaging structure, for example, the components, such as laser diode, focusing lens, laser crystal (for example Nd:YVO₄), nonlinear crystal (for example MgO:PPLN, KTP or LBO etc.) and output coupler and so on, have to be used in laser package. Therefore, it is impossible to massively manufacture so complex green laser devices. Furthermore, the discrete DPSS laser for generating green laser has a larger size, so it is not suitable for the field of laser display.

On the other hand, to generate green laser by means of optical contacted DPSSL is a mature technology, and has been reported in many literatures. For example, U.S. Patent No. 5365539, February 9, 1989. Moravian, et al., "Microchip laser"; U.S. Pat. No. 6,259,711, July 10, 2001, F. Laurell, "Laser"; US patent No. 7742510B2, June 22, 2010, S. Essian, "Compact solid-state laser with nonlinear frequency conversion using periodically poled materials"; U.S. Patent No. 7,570,676, August 4, 2009, S. Essian, et al., "Compact efficient and robust ultraviolet solid-state laser sources based on nonlinear frequency conversion in periodically poled materials"; US patent application 2005/0,063,44100, D. C. Brown, "High-density methods for producing diode-pumped microlasers" etc. However, since the optical bonded interface has a low damage threshold, the output power of the green laser is also low. In order to overcome the problem of high power operation, Essian applied a microchip array structure (Please refer to US patent No. 7724797B2, May 25, 2010, S. Essian, "Solid-state laser arrays using nonlinear frequency conversion using periodically poled materials"). Additionally, Yamamoto disclosed a planar waveguide DPSSL green laser structure (Please refer to US patent 8068525, Nov. 29, 2011, S. Yamamoto, et. al., "Solid-state laser element"), wherein in order to scale up the power, the planar waveguide Nd:YVO₄/PPMgLN array is used. However, the beam array re-shaped thereafter is very complicated.

A green laser module with a laser and a non-linear crystal on a common heat sink and output power dependent gap between them is known from WO2011/140641 A1. A dependence of the Nd-doping level and the length of the laser crystal on the desired laser output power level is known from US 2005/0058174 A1.

### Summary of the invention

The purpose of the invention is to provide a method for making a laser module to solve the problem that the laser module in the prior art is large in size.

The object of the present invention is fulfilled by a method as defined in independent claim 1. Preferred embodiments are defined in the dependent claims.

In order to solve the above technical problem, according to one aspect of the invention, there is provided a method for making a laser module, the method comprises: Step 1: fixing a laser crystal and a nonlinear crystal through at least one spacing element to form a first structure; Step 2: assembling the first structure on a substrate; Step 3: removing the spacing element to form a first laser module.

Further, in the Step 1, the spacing element is connected with the laser crystal and/or the nonlinear crystal through optical bonding or glue bonding.

Further, in the Step 2, the first structure is connected with the substrate through bonding or welding.

Further, the substrate is a heat conductive substrate.

Further, the nonlinear crystal is magnesium oxide doped PPLN, PPLT, PPSLT, PPKTP, KTP, BBO, BIBO or LBO.

Further, the nonlinear crystal is doped with magnesium oxide with molar concentration of 5%.

Further, the laser crystal is neodymium doped yttrium orthovanadate, neodymium doped gadolinium orthovanadate or neodymium doped yttrium aluminium garnet.

Further, the laser crystal is doped with Nd3⁺ ion with doping concentration of 1-3%.

Further, the doping concentration of Nd³⁺ ion in the laser crystal is 1%, 2% or 3%.

Further, the length of the laser crystal is 0.5-5mm, the length of the nonlinear crystal is 0.5-5mm, there is a gap between the laser crystal and the nonlinear crystal, and the length of the gap is 0.2-8mm.

Further, there is a gap between the laser crystal and the nonlinear crystal; if the power of the laser module is 100-150mW, then the length of the laser crystal is 0.5-2mm, the laser crystal is doped with Nd³⁺ ion with doping concentration of 3%, the length of the nonlinear crystal is 0.5-5mm, and the length of the gap is 0.2-2mm; if the power of the laser module is 100-500mW, then the length of the laser crystal is 1-3mm, the laser crystal is doped with Nd³⁺ ion with doping concentration of 2%, the length of the nonlinear crystal is 0.5-5mm, and the length of the gap is 1-3mm; if the power of the laser module is 300-1000mW, then the length of the laser crystal is 2-3mm, the laser crystal is doped with Nd³⁺ ion with doping concentration of 1%, the length of the nonlinear crystal is 0.5-5mm, and the length of the gap is 2-7mm; if the power of the laser module is 1000-5000mW, then the length of the laser crystal is 3-5mm, the laser crystal is doped with Nd³⁺ ion with doping concentration of 0.5%, the length of the nonlinear crystal is 0.5-5mm, and the length of the gap is 3-8mm.

Further, the spacing element comprises two parallel bonded surfaces, the laser crystal and the nonlinear crystal are respectively connected with one of the bonded surfaces so that the input surface and the output surface of the laser crystal and the nonlinear crystal are parallel to each other and vertical to the direction of a laser beam.

Further, the method further comprises Step 4 after the Step 3: combining a plurality of first laser modules into an array, and packaging the nonlinear crystal of each first laser module of the array in a metal holder.

Further, the array is formed by stacking each first laser module in a direction vertical to an optical axis thereof.

According to the invention, the laser crystal and the nonlinear crystal are separately fixed on a heat conductive substrate to form the laser module, thereby the size of the laser module is reduced.

### Brief description of the drawings

The accompanying drawings constituting a part of the application are included to provide a further understanding of the invention. The schematic embodiments and description thereof of the invention are intended to explain the invention, and do not constitute improper restriction to the invention. In the drawings:
Fig. 1 schematically illustrates a flow chart of a method for making a laser module in the invention;
Fig. 2 schematically illustrates a schematic diagram of one embodiment in which a substrate is not installed in the invention;
Fig. 3 schematically illustrates a schematic diagram of another embodiment in which a substrate is not installed in the invention;
Fig. 4 schematically illustrates a dicing diagram of the embodiment illustrated in Fig. 2;
Fig. 5 schematically illustrates a structure diagram of a laser module in which the substrate is installed;
Fig. 6 schematically illustrates a structure diagram of a laser module in which a metal housing is installed;
Fig. 7 schematically illustrates a schematic diagram of a laser module array in one embodiment; and
Fig. 8 schematically illustrates a schematic diagram of a laser module array in another embodiment.

The designators in these figures: 10 first laser module; 11 laser crystal; 12 nonlinear crystal; 13 spacing element; 14 dicing line; 15 substrate; 16 bonding layer; 20 metal holder; 30 array; 40 metal housing.

### Detailed description of the invention

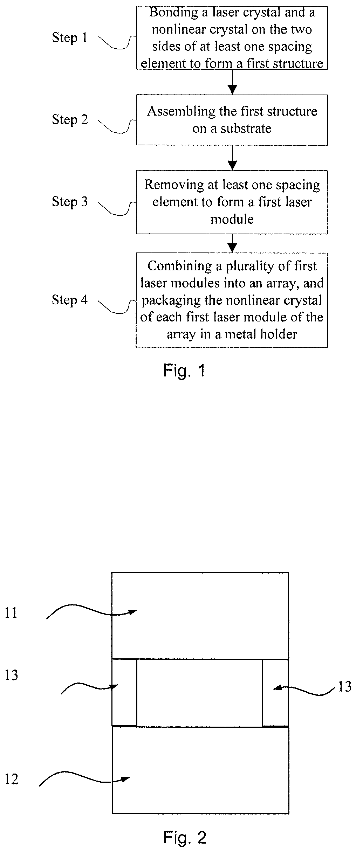

The embodiments of the invention will be described in detail below in conjunction with accompanying drawings. But the invention can be implemented in various ways defined by the claims. The invention provides a method for making a laser module. As shown in Fig. 1, the making method comprises:
Step 1: Fixing a laser crystal 11 and a nonlinear crystal 12 through at least one spacing element 13 to form a first structure. Specifically, the spacing element 13 may be connected with the laser crystal 11 and/or the nonlinear crystal 12 through optical bonding or glue bonding. Preferably, the spacing element 13 comprises two parallel bonded surfaces, the laser crystal 11 and the nonlinear crystal 12 are respectively connected with one of the bonded surfaces so that the input surface and the output surface of the laser crystal 11 and the nonlinear crystal 12 are parallel to each other and vertical to the direction of a laser beam.

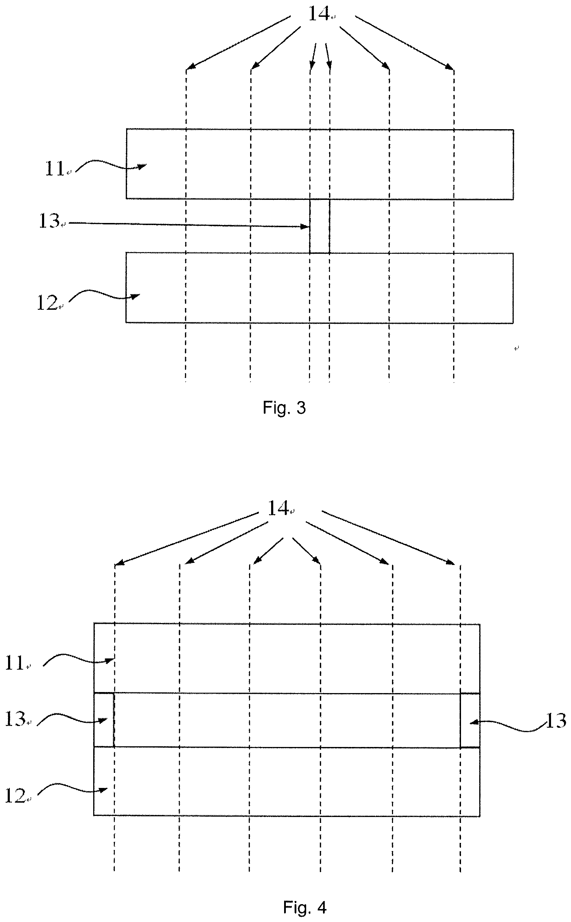

As shown in Fig. 2, the laser crystal 11 and the nonlinear crystal 12 are arranged on the same side of the substrate 15, and there is a gap between the laser crystal 11 and the nonlinear crystal 12. In the embodiment shown in Fig. 2, two identical spacing elements 13 are adopted, and the spacing elements 13 are arranged on the two end parts of the strip-shaped laser crystal 11 and nonlinear crystal 12. In the embodiment shown in Fig. 3, one spacing element 13 is adopted, and the spacing element 13 is located in the middle part of the strip-shaped laser crystal 11 and nonlinear crystal 12.

In this step, the laser crystal 11, the nonlinear crystal 12 and the spacing element 13 need to be aligned carefully, so that all surfaces of the laser crystal 11 and the nonlinear crystal 12 vertical to the laser beam are in a parallel state to form a high quality laser cavity. Preferably, the spacing element 13 can be made from any optical materials easy to be manufactured, such as silicon, silica, or lithium niobate or the like.

As a preferred embodiment, the laser crystal 11 is doped with Nd³⁺ ion with doping concentration of 1-3%. Particularly, the laser crystal 11 is Neodymium doped Yttrium Orthovanadate (Nd:YVO₄), Neodymium Doped Gadolinium Orthovanadate (Nd:GdVO₄), or Neodymium Doped Yttrium Aluminium Garnet (Nd:YAG). Further, the doping concentration of Nd³⁺ ion in the laser crystal 11 is 1%, 2% or 3%. Additionally, the concentration of Nd³⁺ ion can be determined according to different power (for example the power of green laser), for example, the concentration of Nd³⁺ ion in the laser crystal 11 may be 1%, 2% and 3% respectively in the event that the power of the laser module is 100-150mW, 100-500mW and 300-1000mW.

In a preferred embodiment, the nonlinear crystal 12 is doped with magnesium oxide with molar concentration of 5%. Particularly, the nonlinear crystal 12 is MgO doped Periodically Poled Lithium Niobate (MgO:PPLN), Periodically Poled Lithium Tantalate (PPLT), Periodically Poled Near-stoichiometric Lithium Tantalate (PPSLT), Periodically Poled Potassium Titanyl Phosphate (PPKTP), Potassium Titanyl Phosphate (KTP), Beta Barium Borate (BBO), Bismuth Borate (BIBO) or Lithium Triborate (LBO).

It should be noted that, in the invention, the laser crystal 11 and the nonlinear crystal 12 of different materials may be combined to obtain different kinds of laser module. Additionally, the concentration of Nd³⁺ ion in the laser crystal 11 and the concentration of the magnesium oxide in the nonlinear crystal 12 may also be determined and combined according to the need. Furthermore, the substance doped in the laser crystal 11 and the nonlinear crystal 12 is not limited to Nd³⁺ ion and magnesium oxide, also may be other substance commonly used by those skilled in the art.
Step 2: Assembling the first structure on a substrate 15. Preferably, the substrate 15 is made from heat conductive material. Preferably, the heat conductive material may be silicon, sapphire or metal (for example copper, aluminium etc.) or the like. The first structure may be connected with the substrate 15 through bonding or welding, also by other ways known in the art. After the first structure is fixed on the substrate 15, all the surfaces above-mentioned should be in a parallel state (particularly, the parallelism of each surface of the laser crystal 11 and the nonlinear crystal 12 is within 10 seconds).

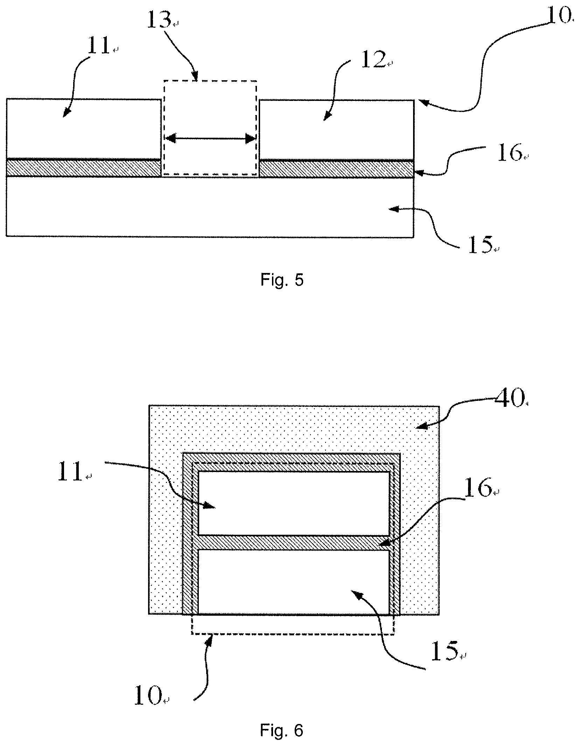

As shown in Figs. 5-6, the laser crystal 11 and the nonlinear crystal 12 are connected with the substrate 15 through a bonding layer 16. The bonding layer 16 may be any heat conductive glue or low temperature metal welding layer. For example, the heat conductive glue may be silicon resin, light epoxy resin or silver colloid or the like. When the low temperature metal welding layer is adopted, the surfaces of the laser crystal 11 and the nonlinear crystal 12 need to be metalized beforehand.
Step 3: Removing at least one spacing element 13 to form a first laser module. After the spacing element 13 is removed, the laser crystal 11 and the nonlinear crystal 12 are fixed on the substrate 15 so as to form the first laser module. Due to the removal of the spacing element 13, a gap is formed at the position of the spacing element 13, and the laser crystal 11 and the nonlinear crystal 12 are separated by the gap.

Please refer to Figs. 3-4, the Step 3 further comprises: removing at least one spacing element 13 by dicing. At this moment, the strip-shaped laser crystal 11 and nonlinear crystal 12 are used to manufacture the laser module of the invention. After the laser crystal 11, the nonlinear crystal 12 and the spacing element 13 are fixed on the substrate 15, the part where the spacing element 13 is located may be diced in a dicing manner to form one or more laser modules.

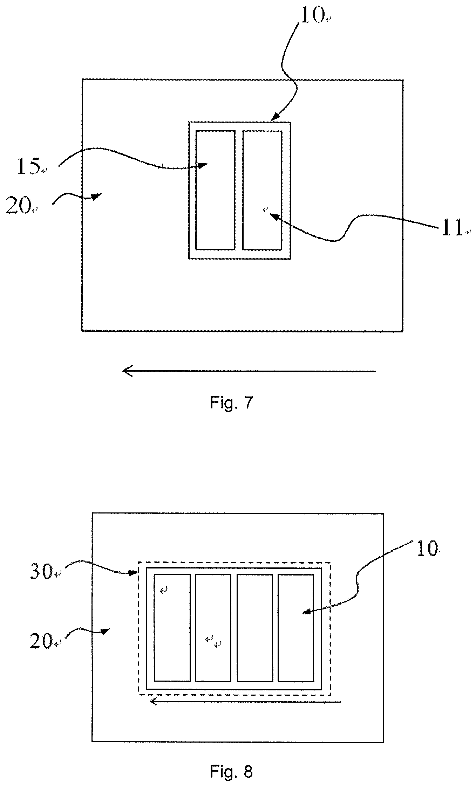

Particularly, in the embodiment shown in Fig. 6, the first laser module 10 is packaged in a metal housing 40 to improve heat dissipation. The metal housing 40 may also protect the gap between the laser crystal 11 and the nonlinear crystal 12. The metal housing 40 may be made of copper, brass or aluminium or the like.
Step 4: Combining a plurality of first laser modules 10 into an array 30, and packaging the nonlinear crystal 12 of each first laser module 10 of the array (30) in a metal holder 20 (Please refer to Fig. 7 and Fig. 8). In such a way, on one hand, it may be compatible with the transverse polarization direction of a pumping laser diode, on the other hand it may scale up the power.

As shown in Fig. 7 and Fig. 8, at least one nonlinear crystal 12 of the first laser module 10 may be packaged in the metal holder 20 in order to be compatible with the transverse polarization direction of the pumping laser diode. In Fig. 7 and Fig. 8, the first laser module 10 has an optical axis in horizontal direction indicated by arrow, this arrangement may keep compatible with the transverse polarization direction of the laser diode (for example a semiconductor laser of 808nm) for pumping the laser module.

Please refer to Fig. 8, the array 30 is formed by stacking each first laser module 10 in a direction vertical to an optical axis thereof. For example, the centre distance of the pumping laser diode is 500 microns. Correspondingly, the spacing between each laser module in Fig. 8 is also 500 microns. By stacking, the green laser with power up to 10W may be generated.

In a preferred embodiment, prior to the Step 1, the method also comprises the step of preparing the laser crystal 11, the nonlinear crystal 12 and the spacing element 13. Specifically, the step comprises polishing, coating and cleaning the surfaces of the laser crystal 11, the nonlinear crystal 12 and the spacing element 13.

Preferably, the input surface of the laser crystal 11 is coated with high transmission film (preferably, the high transmission film is applied to the laser with a wavelength of 808nm) and high-reflection film (preferably, the high-reflection film is applied to the laser with a wavelength of 1064nm); the output surface of the laser crystal 11 is coated with anti-reflection film (preferably, the anti-reflection film is applied to the laser with a wavelength of 1064nm) and high-reflection film (preferably, the high-reflection film is applied to the laser with a wavelength of 532nm). Further, the input surface of the nonlinear crystal 12 is coated with anti-reflection film (preferably, the anti-reflection film is applied to the laser with wavelengths of 1064nm and 532nm), the output surface of the nonlinear crystal 12 is coated with high-reflection film (preferably, the high-reflection film is applied to the laser with a wavelength of 1064nm) and an high transmission film (preferably, the high transmission film is applied to the laser with a wavelength of 532nm).

Due to thermal lensing effect, the piano-parallel cavity structure is essentially equivalent to the concave-plano cavity structure. In order to obtain the laser of higher power, it is necessary to optimize the length of the cavity. Therefore, in order to ensure that the laser module in the invention has higher power (e.g., 300-1000mW), it is necessary to optimize the length of the cavity. The length of the cavity of the laser module in the invention may be controlled by the lengths of the laser crystal 11 and the nonlinear crystal 12, and the length of the gap between the laser crystal 11 and the nonlinear crystal 12. In a preferred embodiment, the length of the laser crystal 11 is 0.5-5mm, the length of the nonlinear crystal 12 is 0.5-3mm, the length of the gap is 0.2-8mm, in such a way the length of the cavity is controlled between 1.2mm and 1.6mm.

If the power of the laser module is 100-150mW, then the length of the laser crystal 11 is 0.5-2mm (particularly, the length may be 0.5mm, 1 mm and 1.5mm), the length of the gap is 0.2-2mm (particularly, the length may be 0.5mm, 1 mm and 1.5mm), and particularly, the laser crystal 11 may be doped with Nd³⁺ ion with doping concentration of 3%.

If the power of the laser module is 100-500mW, then the length of the laser crystal 11 is 1-3mm (particularly, the length may be 1 mm, 2mm and 2.5mm), the length of the gap is 1-3mm (particularly, the length may be 1mm, 2mm and 3mm), and particularly, the laser crystal 11 may be doped with Nd³⁺ ion with doping concentration of 2%.

If the power of the laser module is 300-1000mW, then the length of the laser crystal 11 is 2-3mm (particularly, the length may be 2mm, 2.5mm and 3mm), the length of the gap is 1-5mm (particularly, the length may be 3mm, 4mm and 5mm), and particularly, the laser crystal 11 may be doped with Nd³⁺ ion with doping concentration of 1%.

If the power of the laser module is 1000-5000mW, then the length of the laser crystal 11 is 3-5mm (particularly, the length may be 3mm, 4mm and 5mm), the length of the gap is 5-8mm (particularly, the length may be 6mm, 7mm and 8mm), and particularly, the laser crystal 11 may be doped with Nd³⁺ ion with doping concentration of 0.5%.

Particularly, the power of the laser module in all circumstances above-mentioned refers to the range of the highest output power in all circumstances.

## Claims

1. A method for making a green laser module, wherein the method comprises:
Step 1: fixing a laser crystal (11) and a nonlinear crystal (12) through at least one spacing element (13) to form a first structure;
Step 2: assembling the first structure on a substrate (15);
Step 3: removing the spacing element (13) to form a first laser module;
wherein
there is a gap between the laser crystal (11) and the nonlinear crystal (12);
a power of the laser module at a converted frequency which is generated in the nonlinear crystal is between 100mW and 5000mW;
if the power of the laser module at the converted frequency is 100-150mW, then the length of the laser crystal (11) is 0.5-2mm, the laser crystal (11) is doped with Nd³⁺ ion with doping concentration of 3%, the length of the nonlinear crystal (12) is 0.5-5mm, and the length of the gap is 0.2-2mm;
if the power of the laser module at the converted frequency is 100-500mW, then the length of the laser crystal (11) is 1-3mm, the laser crystal (11) is doped with Nd³⁺ ion with doping concentration of 2%, the length of the nonlinear crystal (12) is 0.5-5mm, and the length of the gap is 1-3mm;
if the power of the laser module at the converted frequency is 300-1000mW, then the length of the laser crystal (11) is 2-3mm, the laser crystal (11) is doped with Nd³⁺ ion with doping concentration of 1%, the length of the nonlinear crystal (12) is 0.5-5mm, and the length of the gap is 2-7mm;
if the power of the laser module at the converted frequency is 1000-5000mW, then the length of the laser crystal (11) is 3-5mm, the laser crystal (11) is doped with Nd³⁺ ion with doping concentration of 0.5%, the length of the nonlinear crystal (12) is 0.5-5mm, and the length of the gap is 3-8mm.

2. The method according to claim 1, **characterized in that**, in the Step 1, the spacing element (13) is connected with the laser crystal (11) and/or the nonlinear crystal (12) through glue bonding.

3. The method according to claim 1, **characterized in that**, in the Step 2, the first structure is connected with the substrate (15) through bonding or welding.

4. The method according to claim 1, **characterized in that** the substrate (15) is a heat conductive substrate.

5. The method according to claim 1, **characterized in that** the nonlinear crystal (12) is magnesium oxide doped PPLN, PPLT, PPSLT, PPKTP, KTP, BBO, BIBO or LBO.

6. The method according to claim 1, **characterized in that** the laser crystal (11) is neodymium doped yttrium orthovanadate, neodymium doped gadolinium orthovanadate or neodymium doped yttrium aluminium garnet.

7. The method according to any one of claims 1-6, **characterized in that** the spacing element (13) comprises two parallel bonded surfaces, the laser crystal (11) and the nonlinear crystal (12) are respectively connected with one of the bonded surfaces so that the input surface and the output surface of the laser crystal (11) and the nonlinear crystal (12) are parallel to each other and vertical to the direction of a laser beam.

8. The method according to any one of claims 1-7, **characterized in that**, further comprising Step 4 after the Step 3: combining a plurality of first laser modules into an array (30), and packaging the nonlinear crystal (12) of each first laser module of the array (30) in a metal holder (20).

9. The method according to claim 8, **characterized in that** the array (30) is formed by stacking each first laser module (10) in a direction vertical to an optical axis thereof.

## Patentansprüche

1. Ein Verfahren zum Herstellen eines Grüner-Laser-Moduls, wobei das Verfahren folgende Schritte aufweist:
Schritt 1: Befestigen eines Laserkristalls (11) und eines nicht-linearen Kristalls (12) durch zumindest ein Beabstandungselement (13), um eine erste Struktur zu bilden;
Schritt 2: Anordnen der ersten Struktur auf einem Substrat (15);
Schritt 3: Entfernen des Beabstandungselements (13), um ein erstes Lasermodul zu bilden;
wobei
zwischen dem Laserkristall (11) und dem nicht-linearen Kristall (12) ein Spalt vorhanden ist;
eine Leistung des Lasermoduls mit einer umgewandelten Frequenz, die in dem nicht-linearen Kristall erzeugt wird, zwischen 100 mW und 5000 mW beträgt;
falls die Leistung des Lasermoduls mit der umgewandelten Frequenz 100-150 mW beträgt, die Länge des Laserkristalls (11) 0,5-2 mm dann beträgt, der Laserkristall (11) mit Nd³⁺-Ion mit einer Dotierungskonzentration von 3 % dotiert ist, die Länge des nicht-linearen Kristalls (12) 0,5-5 mm beträgt und die Länge des Spalts 0,2-2 mm beträgt;
falls die Leistung des Lasermoduls mit der umgewandelten Frequenz 100-500 mW beträgt, die Länge des Laserkristalls (11) 1-3 mm dann beträgt, der Laserkristall (11) mit Nd³⁺-Ion mit einer Dotierungskonzentration von 2 % dotiert ist, die Länge des nicht-linearen Kristalls (12) 0,5-5 mm beträgt und die Länge des Spalts 1-3 mm beträgt;
falls die Leistung des Lasermoduls mit der umgewandelten Frequenz 300-1000 mW beträgt, die Länge des Laserkristalls (11) 2-3 mm dann beträgt, der Laserkristall (11) mit Nd³⁺-Ion mit einer Dotierungskonzentration von 1 % dotiert ist, die Länge des nicht-linearen Kristalls (12) 0,5-5 mm beträgt und die Länge des Spalts 2-7 mm beträgt;
falls die Leistung des Lasermoduls mit der umgewandelten Frequenz 1000-5000 mW beträgt, die Länge des Laserkristalls (11) 3-5 mm dann beträgt, der Laserkristall (11) mit Nd³⁺-Ion mit einer Dotierungskonzentration von 0,5 % dotiert ist, die Länge des nicht-linearen Kristalls (12) 0,5-5 mm beträgt und die Länge des Spalts 3-8 mm beträgt.

2. Das Verfahren gemäß Anspruch 1, **dadurch gekennzeichnet, dass** bei dem Schritt 1 das Beabstandungselement (13) mit dem Laserkristall (11) und/oder dem nicht-linearen Kristall (12) durch eine Klebeverbindung verbunden wird.

3. Das Verfahren gemäß Anspruch 1, **dadurch gekennzeichnet, dass** bei dem Schritt 2 die erste Struktur mit dem Substrat (15) durch Verbinden oder Schweißen verbunden wird.

4. Das Verfahren gemäß Anspruch 1, **dadurch gekennzeichnet, dass** das Substrat (15) ein wärmeleitfähiges Substrat ist.

5. Das Verfahren gemäß Anspruch 1, **dadurch gekennzeichnet, dass** der nicht-lineare Kristall (12) ein mit Magnesiumoxid dotiertes PPLN, PPLT, PPSLT, PPKTP, KTP, BBO, BIBO oder LBO ist.

6. Das Verfahren gemäß Anspruch 1, **dadurch gekennzeichnet, dass** der Laserkristall (11) ein Neodym-dotiertes Yttrium-Orthovanadat, ein Neodym-dotiertes Gadolinium-Orthovanadat oder ein Neodym-dotierter Yttrium-Aluminium-Granat ist.

7. Das Verfahren gemäß einem der Ansprüche 1 bis 6, **dadurch gekennzeichnet, dass** das Beabstandungselement (13) zwei parallele verbundene Oberflächen aufweist, der Laserkristall (11) und der nicht-lineare Kristall (12) jeweils mit einer der verbundenen Oberflächen verbunden sind, so dass die Eintrittsoberfläche und die Austrittsoberfläche des Laserkristalls (11) und des nicht-linearen Kristalls (12) parallel zueinander und senkrecht zu der Richtung eines Laserstrahls sind.

8. Das Verfahren gemäß einem der Ansprüche 1 bis 7, **dadurch gekennzeichnet, dass** dasselbe ferner nach dem Schritt 3 einen Schritt 4 aufweist: Zusammenfassen einer Mehrzahl erster Lasermodule in ein Array (30) und Häusen des nicht-linearen Kristalls (12) jedes ersten Lasermoduls des Arrays (30) in einer Metallhalterung (20).

9. Das Verfahren gemäß Anspruch 8, **dadurch gekennzeichnet, dass** das Array (30) durch Stapeln jedes ersten Lasermoduls (10) in einer Richtung senkrecht zu einer optischen Achse desselben gebildet wird.

## Revendications

1. Procédé de fabrication d'un module laser vert, dans lequel le procédé comprend le fait de:
Etape 1: fixer un cristal de laser (11) et un cristal non linéaire (12) par l'intermédiaire d'au moins un élément d'espacement (13) pour former une première structure;
Etape 2: assembler la première structure sur un substrat (15);
Etape 3: retirer l'élément d'espacement (13) pour former un premier module laser;
dans lequel
il existe un interstice entre le cristal de laser (11) et le cristal non linéaire (12);
une puissance du module laser à une fréquence convertie qui est générée dans le cristal non linéaire est comprise entre 100 mW et 5000 mW;
si la puissance du module laser à la fréquence convertie est de 100 à 150 mW, la longueur du cristal de laser (11) est de 0,5 à 2 mm, le cristal de laser (11) est dopé avec l'ion Nd³⁺ à une concentration de dopage de 3%, la longueur du cristal non linéaire (12) est de 0,5 à 5 mm, et la longueur de l'interstice est de 0,2 à 2 mm;
si la puissance du module laser à la fréquence convertie est de 100 à 500 mW, la longueur du cristal de laser (11) est de 1 à 3 mm, le cristal de laser (11) est dopé avec l'ion Nd³⁺ à une concentration de dopage de 2%, la longueur du cristal non linéaire (12) est de 0,5 à 5 mm, et la longueur de l'interstice est de 1 à 3 mm;
si la puissance du module laser à la fréquence convertie est de 300 à 1000 mW, la longueur du cristal de laser (11) est de 2 à 3 mm, le cristal de laser (11) est dopé avec l'ion Nd³⁺ à une concentration de dopage de 1%, la longueur du cristal non linéaire (12) est de 0,5 à 5 mm, et la longueur de l'interstice est de 2 à 7 mm;
si la puissance du module laser à la fréquence convertie est de 1000 à 5000 mW, la longueur du cristal de laser (11) est de 3 à 5 mm, le cristal de laser (11) est dopé avec l'ion Nd³⁺ à une concentration de dopage de 0,5%, la longueur du cristal non linéaire (12) est de 0,5 à 5 mm, et la longueur de l'interstice est de 3 à 8 mm.

2. Procédé selon la revendication 1, **caractérisé par le fait que**, à l'étape 1, l'élément d'espacement (13) est connecté au cristal de laser (11) et/ou au cristal non linéaire (12) par collage.

3. Procédé selon la revendication 1, **caractérisé par le fait que**, à l'étape 2, la première structure est connectée au substrat (15) par collage ou soudage.

4. Procédé selon la revendication 1, **caractérisé par le fait que** le substrat (15) est un substrat thermo-conducteur.

5. Procédé selon la revendication 1, **caractérisé par le fait que** le cristal non linéaire (12) est du PPLN, PPLT, PPSLT, PPKTP, KTP, BBO, BIBO ou LBO dopé à l'oxyde de magnésium.

6. Procédé selon la revendication 1, **caractérisé par le fait que** le cristal de laser (11) est de l'orthovanadate d'yttrium dopé au néodyme, de l'orthovanadate de gadolinium dopé au néodyme ou du grenat d'yttrium et d'aluminium dopé au néodyme.

7. Procédé selon l'une quelconque des revendications 1 à 6, **caractérisé par le fait que** l'élément d'écartement (13) comprend deux surfaces collées parallèles, le cristal de laser (11) et le cristal non linéaire (12) sont connectées respectivement à l'une des surfaces collées de sorte que la surface d'entrée et la surface de sortie du cristal de laser (11) et du cristal non linéaire (12) soient parallèles entre elles et verticales par rapport à la direction d'un faisceau laser.

8. Procédé selon l'une quelconque des revendications 1 à 7, **caractérisé par le fait qu'**il comprend par ailleurs l'Etape 4 après l'Etape 3: combiner une pluralité de premiers modules laser pour former un réseau (30), et conditionner le cristal non linéaire (12) de chaque premier module laser du réseau (30) dans un support métallique (20).

9. Procédé selon la revendication 8, **caractérisé par le fait que** le réseau (30) est formé en empilant chaque premier module laser (10) dans une direction verticale par rapport à un axe optique de ce dernier.
